# EUROPEAN PATENT APPLICATION

(11) **EP 4 707 583 A1**
(43) Date of publication of application: **11.03.2026**
(21) Application number: 24198405.3
(22) Date of filing: 04.09.2024
(51) Int. Cl.: F03D 1/06, F03D 80/50

(54) **WIND TURBINE ROTOR BLADE, METHOD FOR MANUFACTURING A WIND TURBINE ROTOR BLADE AND METHOD FOR REPAIRING AN ADHESIVE JOINT IN A WIND TURBINE ROTOR BLADE**

(71) Applicant: Nordex Energy SE & Co. KG, 22419 Hamburg (DE); Nordex Energy Spain, S.A.U., 31395 Barasoain (Navarra) (ES)
(72) Inventor: FABRI, Patrick Roman, 22419 Hamburg (DE); PLÁ, Javier Alcántara, 31395 Barásoain (ES); NICKEL, Andreas, 22419 Hamburg (DE)
(74) Representative: Völkl Siebenson Patentanwälte - Partnerschaft mbB

(57) **Abstract**

The invention relates to a wind turbine rotor blade (100) with a half shell (132, 133) and a first bearing structure, the half shell (132, 133) comprising a core material (140) sandwiched between an inner shell laminate (141) and an outer shell laminate (142), the first bearing structure comprising a spar cap (144) and a shear web (146), wherein a flange portion (147, 148) of the shear web is attached to the half shell (132, 133) in an attachment area (150), and the spar cap (144) is arranged in the half shell (132, 133) outside the attachment area (150). The invention also concerns a method for manufacturing a wind turbine rotor blade and a method for repairing an adhesive joint in a wind turbine rotor blade.

## Description

The invention concerns a wind turbine rotor blade, a method for manufacturing a wind turbine rotor blade, and a method for repairing an adhesive joint in a wind turbine rotor blade.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the rotor blade to the rotor hub. The wind turbine rotor blade extends from the root to a tip. Typically, two half shells are produced, which are placed on top of each other after their respective manufacture and bonded together to produce the wind turbine rotor blade. Alternatively, the rotor blade can be manufactured as a whole with an integral manufacturing technology. The half shells themselves may be segmented for manufacturing a so-called split blade or segmented blade.

Typically, the elongated wind turbine rotor blade varies its cross-sectional shape widely over its length. The cylindrical root section changes to an air-foil section, in which the cross-sections of the airfoils get smaller and smaller towards the tip. The wind turbine rotor blade has a leading edge and a trailing edge. Especially the shape of the wind turbine rotor blade in the region of the trailing edge varies significantly over the body length.

It is necessary to provide reinforcement means at or within the wind turbine rotor blade for providing the respectively needed stiffness in view of the loads acting on the rotor blade. A high stiffness is required, also in the region of the trailing edge, which, as mentioned, varies its shape and thickness significantly. For stiffening the rotor blade, one or more spar caps comprising many separate fiber layers are arranged and respectively integrated in the half shells of the wind turbine rotor blade.

It is known in the state of the art to add a shear web between the spar caps. The shear web is a structural element configured to resist shear forces and to improve the ability of the rotor blade to transfer loads efficiently. Commonly, the shear web is fixed to the spar caps by an adhesive joint.

However, voids in adhesive joints occur frequently and - depending on their location and extent - may constitute a structural risk for the rotor blade. Thus, there is a need to rework faulty adhesive joints. Especially with respect to a shear web fixed to a spar cap the rework procedure is difficult. The repair has to be done without damaging or weakening the spar cap.

It is an object of the invention to provide an improved wind turbine blade.

This object is achieved by the independent claims. Advantageous embodiments are given in the sub-claims.

A wind turbine rotor blade with a half shell is proposed. The half shell comprises a core material sandwiched between an inner skin laminate and an outer skin laminate. The wind turbine rotor blade comprises a first bearing structure, the first bearing structure comprising a spar cap and a shear web. A flange portion of the shear web is attached to the half shell in an attachment area. The spar cap is arranged in the half shell outside the attachment area.

In the inventive rotor blade, the shear web is attached to the attachment area via its flange portion. The shear web is not attached to a spar cap.

By arranging the spar cap in the half shell at a position outside of the attachment area, at which the shear web is attached to the half shell, a first bearing structure is constructed which enables an increase of edgewise stiffness of the rotor blade, stabilizing the rotor blade at the trailing edge and also in an area adjacent to the trailing edge.

Two load paths close to the trailing edge can be created. The spar cap can create one load path of the first bearing structure and the shear web can create another load path adjacent to the first bearing structure.

This allows to separate the two load paths created by a shear web directly attached to a spar cap. First, edgewise load is more efficiently spread over the first bearing structure located in the trailing edge. Thereby, the first bearing structure can enable the rotor blade to withstand high edgewise loads. Second, the stability of the trailing edge panel is increased by creating a second load path and support through the shear web attached to the rotor blade shell. This secondary load path does not require a spar cap as its main purpose is to transfer shear loads between the half-shells and stabilizing the rotor blade profile in the trailing edge area.

The flange portion may be directly attached to the attachment area via an adhesive joint. The attachment area does not serve the purpose to increase the edgewise stiffness but is only supporting the shear web, carrying the loads of the second load path.

As the adhesive joint is not formed on the spar cap, as a side effect it can be accessed without damaging the spar cap, i.e., by cutting an opening into the skin laminates of the attachment area. Thus, the spar caps do not pose limitations on the rework options for repairing a faulty adhesive joint.

The rotor blade allows for many rework options and provides a high rework quality especially in otherwise inaccessible outboard regions of the rotor blade. For such a rework, the shell laminates can be partially or entirely removed to rebuild/rework the adhesive joint and subsequently repaired. A partial or an entire removal of shell laminates in the attachment area can also grant access to adjacent rework areas, e.g., the adhesive joint of a shear web fixed to a primary spar cap.

The spar cap of the first bearing structure may form a load path along the trailing edge of the wind turbine rotor blade, stabilizing the trailing edge particularly in edgewise load cases.

The attachment area may be defined as an area to which the shear web of the first bearing structure is attached. The attachment area may extend in the longitudinal direction over the same length as the shear web of the first bearing structure.

In one embodiment, the spar cap is arranged between the attachment area and a trailing edge of the rotor blade. The spar cap may either be arranged in close proximity to the trailing edge or may even form parts of the trailing edge. Thus, the spar cap may also be referred to as a "trailing edge spar cap". The fixation of the shear web to the attachment area may allow to place the spar cap very close to or even at the trailing edge. The position of the spar cap is separated from the shear web and thus not limiting the rework options for repairing a faulty adhesive joint between the shear web and the attachment area.

In one embodiment, the attachment area is free of the core material. The core material may be a hardened foam material, e.g., polyvinylchloride (PVC) or polyethylene terephthalate (PET). As no core material is arranged in the attachment area, the adhesive joint can be assessed by means of an ultrasound device.

In one embodiment, the attachment area comprises the inner skin laminate and the outer skin laminate. The inner skin laminate may be attached to the outer skin laminate in the attachment area. The inner shell layer may comprise an inner skin layer. Additionally, the inner skin may comprise further laminate layers. This applies accordingly to the outer shell layer. This contributes to the above-mentioned functions and advantages.

In one embodiment, at least in a section between a root facing end of the attachment area and a tip facing end of the attachment area, the inner skin laminate is in direct contact to the outer skin laminate in the attachment area. This contributes to the above-mentioned functions and advantages. In one embodiment, the attachment area extends in a longitudinal direction in a section between a root end of the half shell and a tip end of the half shell. The attachment area may extend substantially parallel to the spar caps of the respective half shell.

In one embodiment, the attachment area has a width which is larger than a width of the flange portion of the shear web attached to the attachment area by an adhesive joint. The width may be defined as an extension of the respective element in the chordwise direction. The width of the attachment area may be larger than 120 %, or even larger than 160 % or 230 %, of the width of the adhesive joint, depending on the shear web bonding flange design. The attachment area having a larger width than the flange portion ensures the bonding within the attachment area surface and further allows for a compensation in the tolerances of the placement of the elements of the first bearing structure. This may eliminate a need for adjustments to panels of the core material. This leads to an increase of manufacturing quality while at the same time reducing cycle time by avoiding unscheduled manual labor.

In one embodiment, the inner shell laminate comprises an inner skin layer and shell laminate layer(s). Alternatively, the inner shell laminate consists of an inner skin layer. In one embodiment, the outer shell laminate comprises an outer skin layer and shell laminate layer(s). Alternatively, the outer shell laminate consists of an outer skin layer.

In an embodiment, in an outboard region of the attachment area, a reinforcement layer structure is arranged, the reinforcement layer structure being sandwiched between the inner shell laminate and the outer shell laminate in the outboard region. The reinforcement layer structure may ensure that the attachment area is sufficiently stable in the outboard region in which the inner and the outer shell laminate may be thin.

In an embodiment, the reinforcement layer structure comprises biaxial layers and unidirectional layers. This contributes to the above-mentioned functions and advantages.

In an embodiment, the reinforcement layer structure comprises glass fiber reinforced layers. This contributes to the above-mentioned functions and advantages.

In an embodiment, a part comprising the core material sandwiched between the inner shell laminate and the outer shell laminate is arranged between the attachment area and the spar cap in a chordwise direction. Accordingly, the part comprising the core material sandwiched between the inner shell laminate and the outer shell laminate separates the spar cap from the attachment area, thereby further facilitating a repair of a faulty adhesive joint in the attachment area without damaging the spar cap.

In an embodiment, seen in the longitudinal direction of the rotor blade, the spar cap has a length which is greater than a length of the shear web. In other words, in the first bearing structure, the shear web is shorter than the spar cap. The spar cap may protrude over the shear web towards the root end of the rotor blade. Additionally, or alternatively, the spar cap may protrude over the shear web towards the tip end of the rotor blade.

Close to the root end of the rotor blade, a shell structure of the rotor blade is very thick. Thus, close to the root end, it may not be necessary to provide a shear web in addition to a spar cap to withstand the edgewise loads.

An end of the spar cap facing towards the tip end of the rotor blade may only be slightly offset to an end of the shear web facing towards the tip end of the rotor blade. In other words, towards the tip end of the rotor blade, the spar cap may be slightly longer than the shear web. The offset depends on the aerofoils used and the available construction space, limited by the resulting shear web height which usually is larger than 0.1m for manufacturing purposes.

In an area even closer to the tip end, no element of the first bearing structure may be present. In this area, stability may be provided only by a second bearing structure comprising a primary spar cap in part with additional reinforcement laminate layers located at the trailing edge.

In one embodiment, the shear web extends over a length of at least 60 % of the length of the spar cap in the longitudinal direction. Preferably, the shear web may extend over a length of more than 70 % of the length of the spar cap in the longitudinal direction. The shear web may extend over a length of less than 95 % of the length of the spar cap in the longitudinal direction, preferably less than 90 %. A length of the shear web in this range may ensure that the rotor blade is efficiently stabilized close to the trailing edge, particularly in flapwise load cases.

In one embodiment, the spar cap and/or the shear web and/or the attachment area extends in the longitudinal direction towards a root end of the rotor blade over a position of a maximum chord length of the rotor blade. The rotor blade root area having an essentially circular cross-section abuts a transition area wherein, in the transition area, the cross section transforms towards an aerodynamic air-foil cross-section. This contributes to the above-mentioned functions and advantages.

In an embodiment, the rotor blade comprises a second bearing structure which comprises a spar cap and a shear web and which is arranged between the attachment area and a leading edge of the rotor blade. The second bearing structure may provide a load path.

In an embodiment, a flange portion of the shear web of the second bearing structure is attached to the spar cap of the second bearing structure. This contributes to the above-mentioned functions and advantages.

In an embodiment, the wind turbine rotor blade comprises a pressure side half shell, a suction side half shell and a first bearing structure, the first bearing structure comprising a suction side spar cap, a pressure side spar cap, and a shear web, the shear web having a first flange portion and a second flange portion, wherein
- the first flange portion of the shear web is attached to the attachment area of the pressure side half shell by a first adhesive joint,
- the second flange portion of the shear web is attached to the attachment area of the suction side half shell by a second adhesive joint, and
- the suction side spar cap and the pressure side spar cap are arranged in the respective half shells outside the attachment areas.

In an embodiment, seen in the longitudinal direction of the rotor blade, the primary spar cap has a length which is greater than a length of the shear web of the first bearing structure. In other words, the shear web of the first bearing structure is shorter than the primary spar cap. The primary spar cap may protrude over the shear web of the first bearing structure towards the root end of the rotor blade.

Additionally or alternatively, the primary spar cap may protrude over the shear web of the first bearing structure towards the tip end of the rotor blade.

Close to the root end of the rotor blade, a shell structure of the rotor blade is very thick. Thus, close to the root end, sufficient strength to loads may be provided by the spar cap and the primary spar cap.

The second bearing structure may extend further towards the tip end than the first bearing structure. As the chordwise length of the rotor blade is small close to the tip end, the second bearing structure alone may provide sufficient stability to the rotor blade in this region of the rotor blade.

In an area even closer to the tip end, no element of the first bearing structure may be present. In this area, stability may be provided only by a second bearing structure comprising a primary spar cap.

In one embodiment, the shear web of the first bearing structure extends over a length of at least 40 % of the length of the primary spar cap in the longitudinal direction. Preferably, the shear web of the first bearing structure may extend over a length of more than 50 % of the length of the primary spar cap in the longitudinal direction. The shear web of the first bearing structure may extend over a length of less than 85 % of the length of the primary spar cap in the longitudinal direction, preferably less than 75 %. A length of the elements of the bearing structures in this range may ensure that the rotor blade is efficiently stabilized.

In one embodiment, in a chordwise direction, a position at which the shear web of the first bearing structure is attached to the half shell is arranged between the spar cap and the primary spar cap. In other words, the attachment area is arranged between the spar cap and the primary spar cap in a chordwise direction. This allows to spread the loads applied to the rotor blade over different areas of the rotor blade, thereby avoiding spikes in a load profile. This can prevent the rotor blade from being damaged by the loads and, thus, this contributes to a long lifetime of the rotor blade.

In one embodiment, in a profile area of the rotor blade, the position at which the shear web of the first bearing structure is attached to the half shell is arranged centrally between the spar cap and the primary spar cap in the chordwise direction. In other words, a distance from the shear web of the first bearing structure to the spar cap is roughly equal to a distance from the shear web of the first bearing structure to the primary spar cap in the profile area. In again other word, the attachment area is arranged substantially in the middle between the spar cap and the primary spar cap in the chordwise direction in the profile area.

The shear web may be considered as being arranged "centrally" between the two spar caps, if the distance from the shear web of the first bearing structure to the spar cap is between 50 % and 150 % of the distance from the shear web of the first bearing structure to the primary spar cap over the profile area, preferably between 75 % and 125 % of said distance.

By arranging the shear web centrally between the two spar caps, the shear web can support the shell structure of the rotor blade in an area which is rather far away from both spar caps in the chordwise direction. Thereby, the overall stability of the rotor blade can be improved.

According to another aspect, a method for manufacturing a wind turbine rotor blade is disclosed.

The method comprises the steps of:
- providing a pressure side half shell comprising a spar cap and a core material sandwiched between an inner shell laminate and an outer shell laminate, wherein the pressure side half shell comprises an attachment area, wherein the spar cap is arranged outside of the attachment area,
- providing a suction side half shell comprising a spar cap and a core material sandwiched between an inner shell laminate and an outer shell laminate, wherein the suction side half shell comprises an attachment area, wherein the spar cap is arranged outside of the attachment area,
- attaching a first flange portion of a shear web to the attachment area of the pressure side half shell and attaching a second flange portion of a shear web to the attachment area of the suction side half shell.

The method enables the above-mentioned functions and advantages. The above-described embodiments with respect to the first and second aspects analogously apply to the method. According to another aspect, a method for repairing an adhesive joint in a wind turbine rotor blade is disclosed.

The rotor blade comprises a pressure side half shell, a suction side half shell and a shear web having a first flange portion and a second flange portion, wherein each of the pressure side half shell and the suction side half shell comprises a spar cap and a core material sandwiched between an inner shell laminate and an outer shell laminate,
wherein each of the pressure side half shell and the suction side half shell comprises an attachment area, wherein the spar cap is arranged outside of the attachment area,
wherein the first flange portion of the shear web is attached to the attachment area of the pressure side half shell by a first adhesive joint, wherein the second flange portion of the shear web is attached to the attachment area of the suction side half shell by a second adhesive joint.

The method comprises the steps of:
- partly or entirely removing the outer shell laminate and/or inner shell laminate in the attachment area close to a faulty adhesive joint,
- rebuilding the faulty adhesive joint into a functioning adhesive joint,
- replacing the removed part of the shell laminate.

The method enables the above-mentioned functions and advantages. The above-described embodiments with respect to the first and second aspects analogously apply to the method.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows the attachment of a shear web to an attachment area,
Figure 5 shows a schematic top view on a wind turbine rotor blade according to an embodiment of the invention,
Figures 6 to 9 show the attachment of a shear web to an attachment area according to different embodiments,
Figure 10 shows a schematic flow chart of a method for manufacturing a rotor blade according to an embodiment of the invention, and
Figure 11 shows a schematic flow chart of a method for repairing a faulty adhesive joint in a rotor blade shell according to an embodiment of the invention.

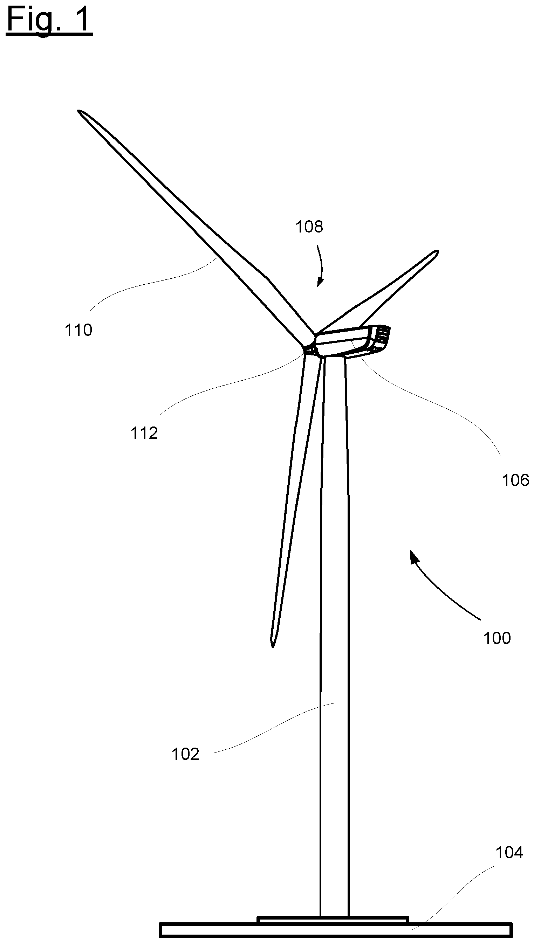

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

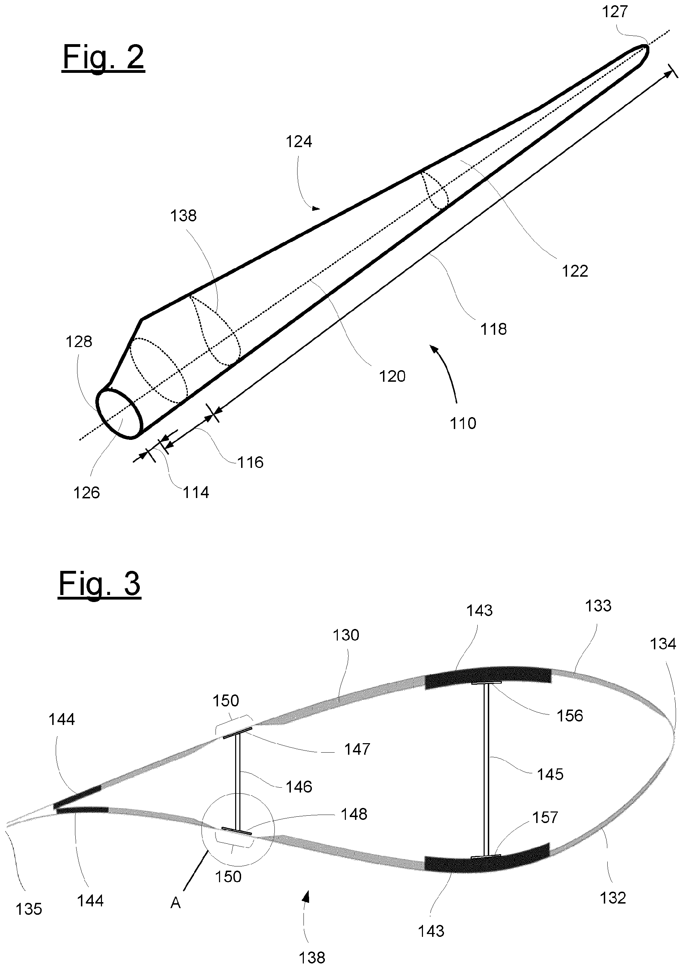

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross-sectional profile 138 of the wind turbine rotor blade 110 according to the invention running transverse to the longitudinal direction 120. The rotor blade 110 has an aerodynamic shell 130 comprising two half shells, i.e., a pressure side half shell 132 and a suction side half shell 133. The two half shells 132, 133 are firmly connected to each other in the longitudinal direction at opposite connecting surfaces located at the leading edge 134 and trailing edge 135.

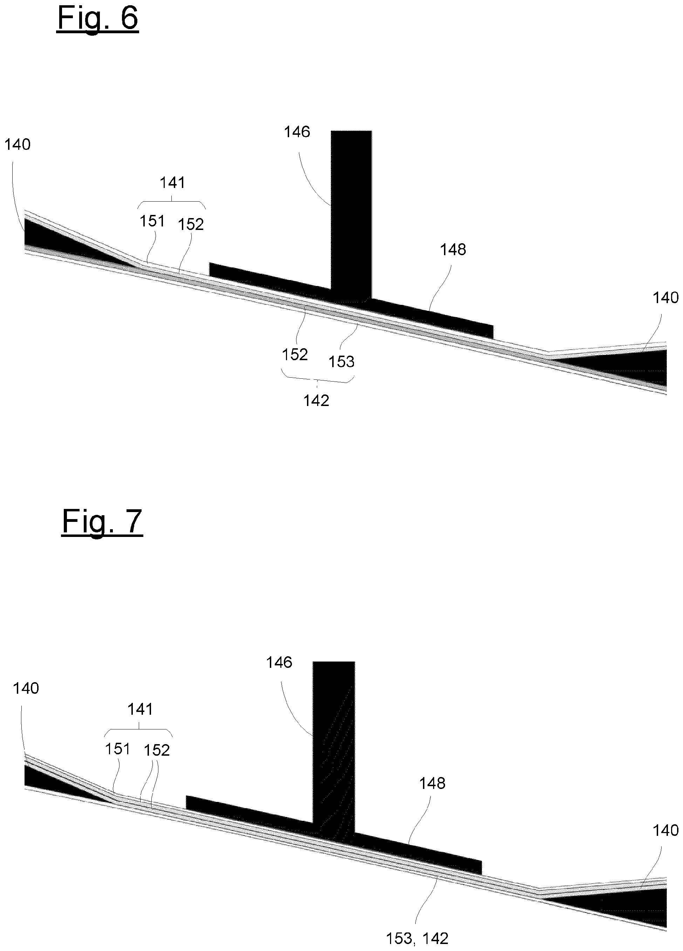

Each half shell 132, 133 comprises a shell-structure which comprises a core material 140 sandwiched between an inner shell laminate 141 and an outer shell laminate 142 (shown in more detail in figure 6). Moreover, each half shell 132, 133 comprises two spar caps, i.e. a primary spar cap 143 and a trailing edge spar cap 144. The spar caps 143, 144 are embedded in the shell-structure. The spar caps 143, 144 carry the main loads during operation of the rotor blade 110. The spar caps 143, 144 can be provided as prefabricated parts.

The rotor blade 110 comprises two shear webs, i.e., a first shear web 145 and a second shear web 146. Each of the shear webs 145, 146 is a structural element configured to resist shear forces and to improve the ability of the half shells 132, 133 to transfer loads efficiently. Each of the shear webs 145, 146 comprises a first flange portion 147,156 connected to the suction side half shell 133 and a second flange portion 148, 157 connected to the pressure side half shell 132.

The rotor blade 110 comprises a first bearing structure which comprises the two trailing edge spar caps 144 and the second shear web 146. Each of the trailing edge spar caps 144 is arranged at the trailing edge 135 or in close proximity to the trailing edge 135 of the rotor blade 110.

The second flange portion 148 of the second shear web 146 is attached to an attachment area 150 of the pressure side half shell 132 and the first flange portion 147 of the second shear web 146 is attached to an attachment area 150 of the suction side half shell 133. The spar caps 144 of the first bearing structure are arranged outside of the attachment areas 150 to which the shear web 146 is attached.

The rotor blade 110 comprises a second bearing structure comprising the two primary spar caps 143 and the first shear web 145. The second bearing structure is arranged between the attachment area 150 and a leading edge 134 of the rotor blade 110. In the second bearing structure, each of the two flange portions 156, 157 of the first shear web 145 is attached to one of the primary spar caps 143, e.g., by an adhesive joint.

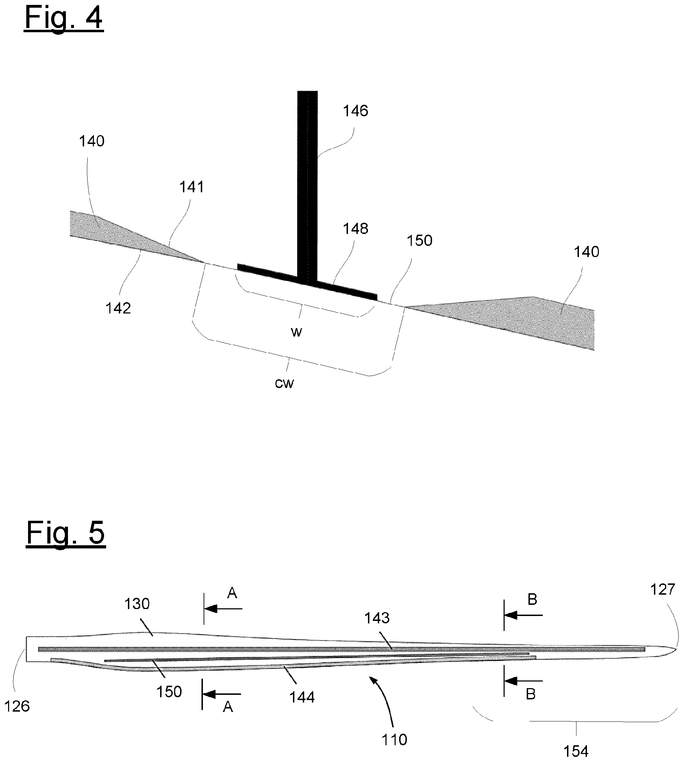

Figure 4 shows an enlarged view of the area A marked in Figure 3. In Figure 4, the attachment of the second flange portion 148 of the shear web 146 to the attachment area 150 of the pressure side half shell 132 is shown in more detail. The first flange portion 147 of the shear web 146 is attached to the attachment area 150 of the suction side half shell 133 in the same manner.

In the attachment area 150, the shell structure of the half shell does not comprise the core material 140. In addition, there is no spar cap located in the attachment area. Instead, only laminate layers, in particular the inner shell laminate 141 and the outer shell laminate 142, are present. Accordingly, the attachment area 150 is free of the core material 140. The inner shell laminate 141 is attached directly to the outer shell laminate 142 in the attachment area.

Voids in adhesive joints may occur frequently and may constitute a structural risk for the rotor blade 110 such that faulty adhesive joints must be reworked. As there is no core material present in the attachment area 150, the attachment area 150 is easily checkable by means of ultrasound to identify faulty adhesive joints between the flange portions 147, 148 of the second shear web 146 and the inner shell laminates 141.

Due to the inaccessibility from the rotor blade inside in the outer regions of the rotor blade, the adhesive joints in these regions can only be repaired by destructive means, i.e., by cutting openings in the rotor blade shell 130. The design of the rotor blade 110 shown in Figures 3 and 4 allows the faulty adhesive joint to be accessed by cutting into the attachment area 150 which is free from the spar caps 144 and free from the core material 140. Accordingly, the design imposes no rework limitations and allows for an extensive rework of the adhesive joints of the rotor blade 110, which would be severely limited if the spar caps 144 and the flanges 147, 148 were bonded to each other.

The flange portions 147, 148 of the second shear web 146 have a width w which is defined as the extension of the respective flange portion in the chordwise direction. The attachment area 150 has a width cw which is defined as the extension of the attachment area 150 in the chordwise direction. The width cw of the attachment area 150 is larger than the width w of flange portion. In particular, the width cw of the attachment area 150 is at least 110% of the width w of the flange portions 147, 148, preferably at least 120% or even more than 160% of the width w of the flange portions 147, 148. As the width cw of the attachment area 150 is larger than the width w of the flange portions 147, 148, tolerances in the chordwise positioning of the elements of the first bearing structure can be compensated, i.e., tolerances in the positioning of the spar caps 144 and the second shear web 146.

Towards the attachment area 150, a thickness of the core material 140 decreases. The core material 140 has a tapered shape. In other words, the core material 140 forms sharp tip ends which define the edges of the attachment area 150.

Figure 5 shows a schematic top view of a wind turbine rotor blade 110. In Figure 5, the pressure side half shell 132 is shown which comprises a primary spar cap 143, a trailing edge spar cap 144 and an attachment area 150. The corresponding suction side half shell 133 which is not visible in Figure 5 also comprises a primary spar cap 143, a trailing edge spar cap 144 and an attachment area 150.

In the longitudinal direction 120, the attachment area 150 begins at a position which is closer to the root end 126 of the rotor blade 110 than the position at which the rotor blade 110 has a maximum chord length. From this position, the attachment area 150 extends towards the tip end 127. The position at which the attachment area 150 begins may correspond to a distance from the root end 126 which is between 5 % and 25 % of the length of the rotor blade 110, preferably between 10 % and 20 % of the length of the rotor blade 110. The position at which the attachment area 150 ends in the longitudinal direction may correspond to a distance from the root end 126 which is between 60 % and 90 % of the length of the rotor blade 110, preferably between 70 % and 80 % of the length of the rotor blade 110.

The primary spar cap 143, which is part of the second bearing structure, and the spar cap 144, which is part of the first bearing structure, extend in the longitudinal direction 120 of the rotor blade 110. In the disclosed example, the spar cap 144 extends closely along the trailing edge 135, in a section (or portion) between the root end 126 and a tip end 127.

The attachment area 150 also extends in the longitudinal direction 120. The attachment area 150 has a substantially linear shape. The attachment area 150 is arranged between the two spar caps 143, 144 in the chordwise direction. The attachment area 150 may be substantially parallel to the two spar caps 143, 144.

In the longitudinal direction 120 towards the tip end 127 of the rotor blade 110, a distance between the attachment area 150 and the spar cap 144 decreases. In the longitudinal direction 120 towards the tip end 127 of the rotor blade 110, a distance between the attachment area 150 and the primary spar cap 143 also decreases. As the rotor blade 110 gets narrower towards the tip end 127, the space available between the primary spar cap 143 and the spar 144 cap decreases such that the attachment area 150 approximates both of the spar caps 143, 144 in the longitudinal direction.

By arranging the attachment area 150 as shown in Figure 5, the area between the two spar caps 143, 144 is stabilized and loads applied to the rotor blade 110 are spread over different areas of the rotor blade 110, thereby providing a rotor blade with a high stability.

Figure 6 shows the attachment of a flange portion 148 of the second shear web 146 to the attachment area 150 in more detail according to one embodiment of the invention. In the embodiment shown in Figure 6, the attachment area 150 has a symmetrical laminate layup at its edges.

In the shell structure adjacent to the attachment area 150, the core material 140 is sandwiched between the inner shell laminate 141 and the outer shell laminate 142. The inner shell laminate 141 faces towards the inside of the rotor blade 110. The inner shell laminate 141 comprises an inner skin layer 151 and a laminate layer 152. The inner skin layer 151 is the innermost layer of the shell structure.

The outer shell laminate 142 faces towards the outside of the rotor blade 110. The outer shell laminate 142 comprises an outer skin layer 153 and a laminate layer 152. The outer skin layer 153 is the outermost layer of the shell structure.

The attachment area 150 is free of the core material 140. In the attachment area 150, the inner shell laminate 141 is attached directly onto the outer shell laminate 142. The laminate layer 152 of the inner shell laminate 141 is attached to the laminate layer 152 of the outer shell laminate 142 in the attachment area 150.

The flange portion 148 of the second shear web 146 is fixed to the inner skin layer 151 by the adhesive joint. If the adhesive joint is faulty, it can be accessed for reworking by cutting an opening into the attachment area 150. As the attachment area 150 consists of laminate layers and is free of the core material 140 and free of the spar caps 144, the cut can be made without having to consider rework limitations due to structural members such as the spar caps.

Figure 7 shows the attachment of the flange portion 148 of the second shear web 146 to the attachment area 150 according to another embodiment. In the embodiment shown in Figure 7, the outer shell laminate 142 consists of the outer skin layer 153. The inner shell laminate 141 comprises the inner skin layer 151 and laminate layers 152. The core material 140 is sandwiched between the outer skin layer 153 and the laminate layers 152 of the inner shell laminate 141 outside of the attachment area 150. In the attachment area 150, the outer skin layer 153 is attached to the laminate layers 152 of the inner shell laminate 141.

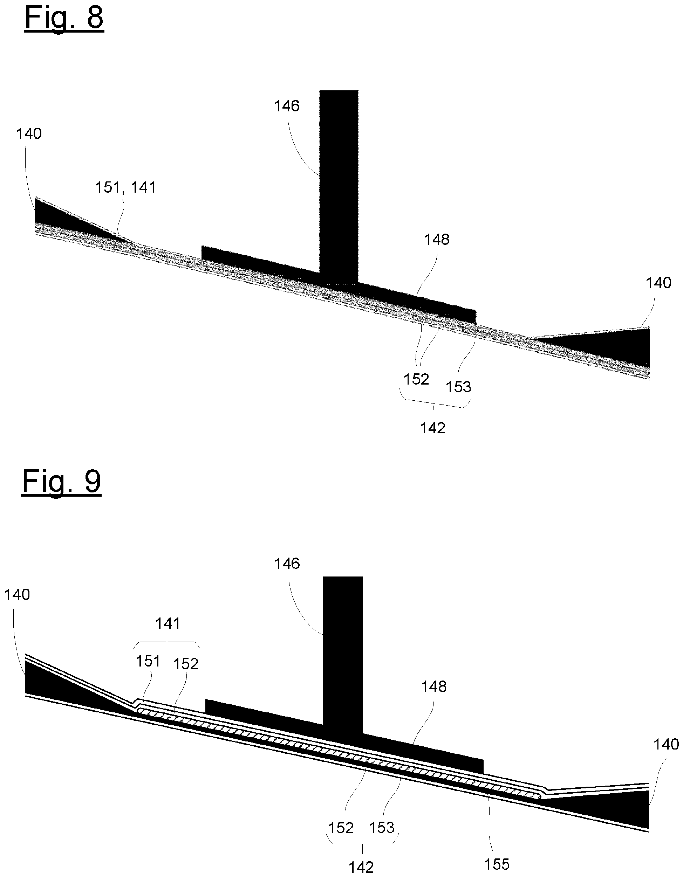

Figure 8 shows the attachment of the flange portion 148 to the attachment area 150 according to another embodiment. In the embodiment shown in Figure 8, the inner shell laminate 141 consists of the inner skin layer 151. The outer shell laminate 142 comprises laminate layers 152 and an outer skin layer 153. Outside the attachment area 150, the core material 140 is sandwiched between the inner skin layer 151 and the laminate layers 152 of the outer shell laminate 142. In the attachment area 150, the inner skin layer 151 is attached to the laminate layers 152 of the outer shell laminate 142.

Each of Figures 3, 4 and 6 to 8 shows cross-sectional views of the rotor blade 110 taken along the line indicated as AA in Figure 5. These cross-sectional views are taken in an area of the rotor blade 110 which is not close to the tip end 127, i.e., outside of an outboard region 154. Here, the thickness of the inner and outer shell laminate 141, 142 is sufficient to ensure a structural integrity of the attachment area 150. In other words, the attachment area is thick enough to handle the stresses and forces it will encounter during its lifespan.

In Figure 5, another cross-section is indicated by line BB. The line BB is arranged in the outboard region 154 of the rotor blade 110, i.e., in a region which is close to the tip end 127 of the rotor blade 110. Towards the tip end 127, the number of fiber layers in the inner and outer shell laminate 141, 142 is reduced more and more. Accordingly, the thickness of the inner shell laminate 141 and of the outer shell laminate 142 decreases towards the tip end 127. Thus, in the outboard region 154, the attachment area 150, which is free of the core material 140, may not have a sufficient structural integrity.

Figure 9 shows an enlarged view of the attachment of the flange portion 148 of the second shear web 146 to the attachment area 150 in the outboard region 154. In the outboard region 154, a reinforcement layer structure 155 is arranged in the attachment area 150. The reinforcement layer structure 155 is sandwiched between the inner shell laminate 141 and the outer shell laminate 142 in the outboard region 154. The reinforcement layer structure 155 improves the structural integrity of the attachment area 150 in the outboard region 154.

The reinforcement layer structure 155 comprises biaxial layers and unidirectional layers. The reinforcement layer structure 155 comprises glass fiber layers. The reinforcement layer structure 155 comprises biaxial glass fiber layers which are supplemented by unidirectional glass fiber layers. The reinforcement layer structure 155 acts as a reinforcement, improving the stability of the rotor blade 110 in the attachment area 150 in the outboard regions 154. Additionally, the reinforcement layer structure 155 is configured to prevent cracks in the shell structure.

Figure 9 shows a symmetric shell-structure, similar to the structure shown in Figure 6, wherein the core material 140 is sandwiched between an inner shell laminate 141 comprising an inner skin layer 151 and a laminate layer 152 and an outer shell laminate 142 comprising an outer skin layer 153 and a laminate layer 152. The reinforcement layer structure 155 can also be integrated into the shell structures shown in Figures 7 and 8, wherein either the inner shell laminate 141 consists of the inner skin layer 151 (Fig. 7) or the outer shell laminate 142 consists of the outer skin layer 153 (Fig. 8). In these configurations, the reinforcement layer structure 155 is also sandwiched between the inner shell laminate 141 and the outer shell laminate 142 in the outboard region 154 of the attachment area 150.

In an alternative embodiment, the reinforcement layer structure 155 is arranged on the inside of the inner shell laminate 141. The flange portions 147, 148 of the second shear web 146 are attached directly to the reinforcement layer structure 155 by an adhesive joint.

All of Figures 6 to 9 show the fixation of the flange portion 148 of the second shear web 146 to the attachment area 150 of the pressure side half shell 132. The other flange portion 147 of the second shear web 146 can be fixed to the attachment area 150 of the suction side half shell 133 in the same manner as shown in Figures 6 to 9 with respect to the suction side half shell 133. The shell structure in the pressure side half shell 132 can either be identical to the shell structure in the suction side half shell 133 or differ from the shell structure in the suction side half shell 133. For example, both of the pressure side half shell 132 and the suction side half shell 133 may have a symmetric shell structure as shown in Figure 6 or a near-symmetric shell structure as shown in Figures 7 and 8. Alternatively, one of the pressure side half shell 132 and the suction side half shell 133 may have a symmetric shell structure as shown in Figure 6 and the other of the pressure side half shell 132 and the suction side half shell 133 may have a near-symmetric shell structure as shown in Figures 7 and 8.

In all of the above-described embodiments, the spar caps 144 are arranged closer to the trailing edge 135 than the attachment area 150 and the spar caps 144 are arranged outside of the attachment areas 150. Thus, faulty adhesive joints of the second shear web 146 remain easily inspectable and accessible via the attachment area 150. It is enabled to rework faulty adhesive joints without damaging the spar caps 144, thereby improving rework options and increasing the rework quality. For such a rework, the inner and the outer shell laminates 141, 142 in the attachment area 150 are partially or entirely removed to rebuild or rework the adhesive joints. Subsequently, the replaced shell laminates 141, 142 are repaired by standard shell rework procedures.

In all of the above-shown embodiments, the spar caps 144 of the first bearing structure are arranged either in close proximity to the trailing edge 135 of the rotor blade 110 or directly at the trailing edge 135. This arrangement of the spar caps 144 serves multiple purposes, namely:
- forming a secondary load path along the trailing edge 135 of the wind turbine rotor blade 110, stabilizing the trailing edge 135 particularly in edgewise load cases,
- creating the majority of edge-wide stiffness of the wind turbine rotor blade 110, and
- creating the basis for a homogenous trailing edge structural adhesive joint.

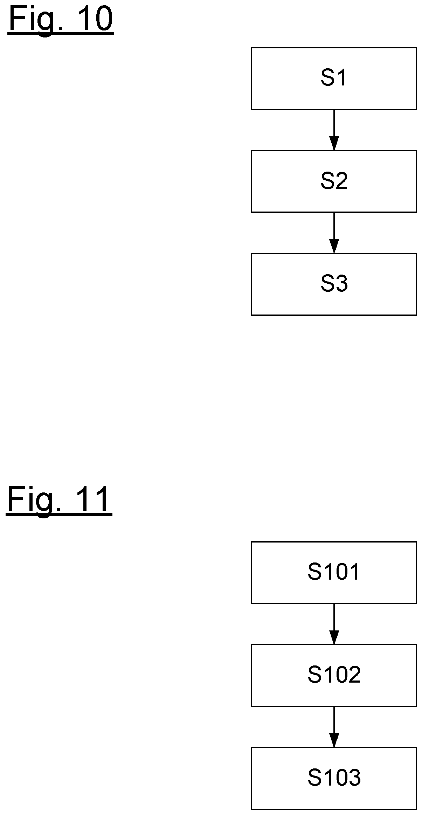

With regard to Figure 10, a flow chart of a method for manufacturing a wind turbine rotor blade 110 is shown. In particular, the method may be used to manufacture the above-described rotor blade 110.

In a first step S1, a pressure side half shell 132 is manufactured, wherein the pressure side half shell 132 comprises a spar cap 144 and core material 140 sandwiched between an inner shell laminate 141 and an outer shell laminate 142, wherein the pressure side half shell 132 comprise an attachment area 150, wherein the spar cap 144 is arranged outside of the attachment area 150. The spar cap 144 is a trailing edge spar cap. The pressure side half shell 132 may further comprise a primary spar cap 143.

In a second step S2, a suction side half shell 133 is manufactured which comprises a spar cap 144 and a core material 140 sandwiched between an inner shell laminate 141 and an outer shell laminate 142, wherein the suction side half shell 133 comprises an attachment area 150, wherein the spar cap 144 is arranged outside of the attachment area 150. The spar cap 144 is a trailing edge spar cap. The suction side half shell 133 may further comprise a primary spar cap 143.

Steps S1 and S2 can be performed either subsequently or parallel to each other. It is also possible to execute step S2 first and to execute step S1 after step S2.

In a third step S3, a first flange portion 147 of a shear web 146 is attached to the attachment area 150 of the suction side half shell 133 and a second flange portion 148 of the shear web 146 is attached to the attachment area 150 of the pressure side half shell 132. Thereby, a first bearing structure of the wind turbine rotor blade 110 is formed which comprises the spar cap 144 of the pressure side half shell 132, the spar cap 144 of the suction side half shell 133 and the shear web 146. In step S3, the pressure side half shell 132 and the suction side half shell 133 are fixed to each other by an adhesive joint at the trailing edge 135 and by an adhesive joint at the leading edge 134.

Figure 11 shows a flow chart of a method for repairing an adhesive joint in a wind turbine rotor blade 110.

The method can be used to repair an adhesive joint in one of the above-described rotor blades 110. The wind turbine rotor blade 110 comprises a pressure side half shell 132, a suction side half shell 133 and a shear web 146 having a first flange portion 147 and a second flange portion 148. Each of the pressure side half shell 132 and the suction side half shell 133 comprises a (trailing edge) spar cap 144 and a core material 140 sandwiched between an inner shell laminate 141 and an outer shell laminate 142. Each of the pressure side half shell 132 and the suction side half shell 133 comprises an attachment area 150, wherein the spar cap 144 is arranged outside of the attachment area 150, wherein the first flange portion 147 of the shear web 146 is attached to the attachment area 150 of the suction side half shell 133 by a first adhesive joint and the second flange portion 148 of the shear web 146 is attached to the attachment area 150 of the pressure side half shell 132 by a second adhesive joint. It is assumed that one of the first and the second adhesive joints is faulty and requires a repair.

In a first step S101, the outer shell laminate 142 and/or the inner shell laminate 141 in the attachment area 150 close to the faulty adhesive joint is partly or entirely removed.

In a second step S102, the faulty adhesive joint is rebuilt into a functioning adhesive joint.

In a final step S103, the removed part of the shell laminates 141, 142 is replaced.

For the method of repairing the adhesive joint, it is not required to remove core material 140 or a spar cap 144. Accordingly, the spar caps 144 and the core material 140 do not pose limitations to the possible rework operations.

### Reference numbers

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: root end
- 127: tip end
- 128: flange connection
- 130: shell
- 132: pressure side half shell
- 133: suction side half shell
- 134: leading edge
- 135: trailing edge
- 138: cross-sectional profile
- 140: core material
- 141: inner shell laminate
- 142: outer shell laminate
- 143: primary spar cap
- 144: (trailing edge) spar cap
- 145: first shear web
- 146: second shear web
- 147: first flange portion of the second shear web connected .to the suction side half shell

- 148: second flange portion of the second shear web connected to the pressure side half shell
- 150: attachment area
- 151: inner skin layer
- 152: laminate layer
- 153: outer skin layer
- 154: outboard region
- 155: reinforcement layer structure
- 156: first flange portion of the first shear web connected to the suction side half shell
- 157: second flange portion of the first shear web connected to the pressure side half shell

- w: width of the flange portion
- cw: width of the attachment area

## Claims

1. Wind turbine rotor blade (100) with a half shell (132, 133) and a first bearing structure,
the half shell (132, 133) comprising a core material (140) sandwiched between an inner shell laminate (141) and an outer shell laminate (142),
the first bearing structure comprising a spar cap (144) and a shear web (146),
wherein
- a flange portion (147, 148) of the shear web is attached to the half shell (132, 133) in an attachment area (150), and
- the spar cap (144) is arranged in the half shell (132, 133) outside the attachment area (150).

2. Wind turbine rotor blade (110) according to claim 1, wherein the spar cap (144) is arranged between the attachment area (150) and a trailing edge (135) of the rotor blade (110) .

3. Wind turbine rotor blade (110) according to claim 1 or claim 2,
wherein the attachment area (150) is free of the core material (140).

4. Wind turbine rotor blade (110) according to any one of the preceding claims,
wherein the attachment area (150) comprises the inner shell laminate (141) and the outer shell laminate (142).

5. Wind turbine rotor blade (110) according to any one of the preceding claims,
wherein at least in a section between a root facing end of the attachment area (150) and a tip facing end of the attachment area (150), the inner shell laminate (141) is in direct contact to the outer shell laminate (142).

6. Wind turbine rotor blade (110) according to any one of the preceding claims,
wherein the attachment area (150) has a width (cw) which is larger than a width (w) of the flange portion (147, 148) of the shear web (146) attached to the attachment area (150) by an adhesive joint.

7. Wind turbine rotor blade (110) according to any one of the preceding claims,
wherein the inner shell laminate (141) comprises an inner skin layer (151) and a laminate layer (152),
or
wherein the inner shell laminate (141) consists of an inner skin layer (151),
and/or
wherein the outer shell laminate (142) comprises an outer skin layer (153) and a laminate layer (152),
or
wherein the outer shell laminate (142) consists of an outer skin layer (153).

8. Wind turbine rotor blade (110) according to any one of the preceding claims,
wherein, in an outboard region (154) of the attachment area (150), a reinforcement layer structure (155) is arranged, the reinforcement layer structure (155) being sandwiched between the inner shell laminate (141) and the outer shell laminate (142) in the outboard region (154).

9. Wind turbine rotor blade (110) according to claim 8, wherein the reinforcement layer structure (155) comprises biaxial layers and unidirectional layers.

10. Wind turbine rotor blade (110) according to any one of the preceding claims,
wherein a part comprising the core material (140) sandwiched between the inner shell laminate (141) and the outer shell laminate (142) is arranged between the attachment area (150) and the spar cap (144) in a chordwise direction.

11. Wind turbine rotor blade (110) according to any one of the preceding claims,
wherein the spar cap (144) has a length which is longer than a length of the shear web (146).

12. Wind turbine rotor blade (110) according to any one of the preceding claims,
wherein the shear web (146) extends over a length of at least 60 % of the length of the spar cap (144) in the longitudinal direction (120).

13. Wind turbine rotor blade (110) according to any one of the preceding claims,
wherein the spar cap (144) and/or the shear web (146) and/or the attachment area (150) extends in the longitudinal direction (120) towards a root end (126) of the rotor blade (110) over a position of a maximum chord length of the rotor blade (110).

14. Wind turbine rotor blade (110) according to any one of the preceding claims,
comprising a second bearing structure which comprises a primary spar cap (143) and a shear web (145) and which is arranged between the attachment area (150) and a leading edge (134) of the rotor blade (110).

15. Wind turbine rotor blade (110) according to claim 14, wherein the primary spar cap (143) has a length which is greater than a length of the shear web (146) and/or the attachment area (150) of the first bearing structure.

16. Wind turbine rotor blade (110) according to any one of claims 14 to 15,
wherein, in a chordwise direction, a position at which the shear web (146) of the first bearing structure is attached to the half shell (132, 133) is arranged between the spar cap (144) and the primary spar cap (143).

17. Wind turbine rotor blade (110) according to claim 16, wherein, in a profile area (118) of the rotor blade (110), the position at which the shear web (146) of the first bearing structure is attached to the half shell (132, 133) is arranged centrally between the spar cap (144) and the primary spar cap (143) in the chordwise direction.

18. Method for manufacturing a wind turbine rotor blade (110),
comprising the steps of:
- providing a pressure side half shell (132) comprising a spar cap (144) and a core material (140) sandwiched between an inner shell laminate (141) and an outer shell laminate (142), wherein the pressure side half shell (132) comprises an attachment area (150), wherein the spar cap (144) is arranged outside of the attachment area (150),
- providing a suction side half shell (133) comprising a spar cap (144) and a core material (140) sandwiched between an inner shell laminate (141) and an outer shell laminate (142), wherein the suction side half shell (133) comprises an attachment area (150), wherein the spar cap (144) is arranged outside of the attachment area (150),
- attaching a first flange portion (147) of a shear web (146) to the attachment area (150) of the suction side half shell (133) and attaching a second flange portion (148) of the shear web (146) to the attachment area (150) of the pressure side half shell (132).

19. Method for repairing an adhesive joint in a wind turbine rotor blade (110),
comprising a pressure side half shell (132), a suction side half shell (133) and a shear web (146) having a first flange portion (147) and a second flange portion (148),
wherein each of the pressure side half shell (132) and the suction side half shell (133) comprises a spar cap (144) and a core material (140) sandwiched between an inner shell laminate (141) and an outer shell laminate (142),
wherein each of the pressure side half shell (132) and the suction side half shell (133) comprises an attachment area (150), wherein
the spar cap (140) is arranged outside of the attachment area (150),
wherein the first flange portion (147) of the shear web (146) is attached to the attachment area (150) of the suction side half shell (133) by a first adhesive joint,
wherein the second flange portion (148) of the shear web (146) is attached to the attachment area (150) of the pressure side half shell (132) by a second adhesive joint, comprising the steps of:
- partly or entirely removing the outer shell laminate (142) and/or inner shell laminate (141) in the attachment area (150) close to a faulty adhesive joint,
- rebuilding the faulty adhesive joint into a functioning adhesive joint,
- replacing the removed part of the shell laminates (141, 142) .
